(19) Europäisches Patentamt
European Patent Office
Office européen des brevets

(11) EP 1 255 653 B1

(12) # EUROPÄISCHE PATENTSCHRIFT

(45) Veröffentlichungstag und Bekanntmachung des Hinweises auf die Patenterteilung:
**04.11.2009 Patentblatt 2009/45**

(21) Anmeldenummer: **01905663.9**

(22) Anmeldetag: **11.01.2001**

(51) Int Cl.:
***B60C 23/06*** *(2006.01)*

(86) Internationale Anmeldenummer:
**PCT/EP2001/000266**

(87) Internationale Veröffentlichungsnummer:
**WO 2001/051298 (19.07.2001 Gazette 2001/29)**

(54) **VERFAHREN UND VORRICHTUNG ZUR ERKENNUNG EINES DRUCKVERLUSTES VON REIFEN IN KRAFTFAHRZEUGEN MIT PLAUSIBILITÄTSPRÜFUNG**

METHOD AND DEVICE FOR DETECTING A PRESSURE DROP IN TYRES OF MOTOR VEHICLES AND PLAUSIBILITY CHECK THEREFOR

PROCEDE ET DISPOSITIF DE DETECTION D'UNE PERTE DE PRESSION SUR LES PNEUMATIQUES D'UN VEHICULE, AVEC CONTROLE DE PLAUSIBILITE

(84) Benannte Vertragsstaaten:
**DE FR IT**

(30) Priorität: **14.01.2000 DE 10001221**
**07.09.2000 DE 10044114**

(43) Veröffentlichungstag der Anmeldung:
**13.11.2002 Patentblatt 2002/46**

(73) Patentinhaber: **Continental Teves AG & Co. oHG**
**60488 Frankfurt (DE)**

(72) Erfinder:
- **GRIESSER, Martin**
  **65760 Eschborn (DE)**
- **IHRIG, Hans, Georg**
  **64289 Darmstadt (DE)**

(56) Entgegenhaltungen:
**EP-A- 0 489 563** **EP-A- 0 579 446**
**EP-A- 0 844 112** **DE-A- 19 721 480**
**DE-C- 4 327 492** **DE-C- 19 712 097**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 255 653 B1

## Beschreibung

Die Erfindung betrifft ein Verfahren gemäß Oberbegriff von Anspruch 1 und eine Vorrichtung gemäß Oberbegriff von Anspruch 8.

Kraftfahrzeuge, die mit einem elektronischen System zur Bremsdruckregelung oder zur Regelung der Fahrdynamik (ABS, ASR, ESP etc.) ausgestattet sind, weisen üblicherweise Einrichtungen zur Messung der Winkelgeschwindigkeit der Fahrzeugräder, wie etwa Raddrehzahlsensoren, auf. Es ist bereits bekannt, daß sich zur Reifendruckverlusterkennung die Beobachtung einer Änderung in der Winkelgeschwindigkeit der Räder eignet, da sich bei einem Reifendruckverlust der dynamische Abrollumfang und damit auch der sogenannte dynamische Radradius verringert. Zusätzlich kann, was bei elektronischen Bremsdruckregelsystemen verbreitet ist, aus dem Verlauf der aufgenommenen und ggf. gespeicherten Radgeschwindigkeitsdaten die aktuelle Fahrsituationen ermittelt werden. Die Druckverlusterkennung läßt sich am einfachsten während Fahrsituationen mit geringem Einfluß auf die Differenz der Radgeschwindigkeiten, z.B. während einer Geradeausfahrt ohne eine auf das Fahrzeug wirkende Kraft (Längs-, Querbeschleunigung, Gierrate) durchführen.

Um eine Druckverlusterkennung mit erhöhter Genauigkeit insbesondere auch bei dynamischen Fahrmanövern zu realisieren, ist in der Deutschen Patentanmeldung 199 61 681 ein Verfahren vorgeschlagen worden, bei dem zusätzliche physikalische Daten, wie beispielsweise Gierrate, Beschleunigung, Bremsenbetätigung, Motormoment usw. in den Erkennungsalgorithmus zur Druckverlusterkennung einbezogen werden, so daß eine Druckverlusterkennung auch während dynamischer Fahrmanöver durchführbar ist.

In der DE 197 21 480 A1 ist ein in ein elektronisches Antiblockiersystem (ABS) integrierbares Druckverlusterkennungsverfahren beschrieben, bei dem nach Auslösen eines Reset-Schalters, der ausgelöst wird, wenn der Nenndruck der Räder eingestellt ist, zunächst eine zeitlich begrenzte Lernphase durchlaufen wird, in der ein Mikrocontroller unter Berücksichtigung der Fahrsituation Radwinkelgeschwindigkeiten verfolgt und aus dem zeitlichen Verlauf der aus den Radwinkelgeschwindigkeiten gebildeten Referenzwerte obere und untere Grenzwerte ($G_1$ und $G_2$) festlegt. Im Anschluß an die Lernphase beginnt eine Vergleichsphase, in der überprüft wird, ob die aktuell bestimmten Referenzwerte innerhalb des durch die gelernten Grenzwerte definierten Bereichs liegen.
Das Verfahren berücksichtigt die aktuelle Fahrsituation, indem während der Lernphase und während der Vergleichsphase Referenzwerte während ungeeigneter, dynamischer Fahrsituationen ausgeschlossen werden.

Die Schrift EP 0 489 563 A1 offenbart ein gattungsgemäßes Verfahren zur Erkennung eines Reifendruckverlustes, wobei aus den Raddrehzahlsignalen der vier Räder drei Verhältnis-Faktoren berechnet werden. Nimmt einer der Verhältnis-Faktoren einen Wert außerhalb eines vorgegebenen Wertebereiches an, so wird auf einen Druckverlust geschlossen. Um Fehlwarnungen hervorgerufen durch kurzzeitige Schwankungen eines Verhältnis-Faktors zu unterdrücken, wird eine Druckverlust-Warnung jedoch erst dann ausgegeben, wenn ein Verhältnis-Faktor für eine vorgegebene Zeitdauer außerhalb des vorgegebenen Wertebereiches liegt.

Eine Vorrichtung mit Mikroprozessor, welche die Raddrehzahlsignale der Räder überwacht und diese zur Druckverlusterkennung und Bremsdrucksteuerung eines Antiblockiersystems (ABS) verwendet, wird in der EP 0 579 446 A1 offenbart. Bei der Druckverlusterkennung werden Einflüsse wie Kurvenfahrt, Bremsung oder Beschleunigung berücksichtigt, jedoch wird keine Plausibilitätsprüfung zur Vermeidung von Fehlwarnungen durchgeführt.

Obwohl bereits zahlreiche Verfahren zur Erkennung eines Druckverlustes durch Auswertung der Radgeschwindigkeit vorgeschlagen wurden, besteht immer noch Bedarf, die Druckverlusterkennung auf Basis von Raddrehzahlinformationen noch zuverlässiger durchzuführen, insbesondere um ausgesprochen unerwünschte Fehlwarnungen, wie sie beispielsweise auf Schnee oder Eis vorkommen können, weitestgehend zu vermeiden. Das Problem bei der Druckverlusterkennung besteht unter anderem darin, eine vergleichsweise geringe Änderung des dynamischen Abrollradius aufgrund eines Druckverlustes von größeren Änderungen des dynamischen Abrollradius aufgrund von Kurvenfahrt, Beschleunigung, Verzögerung und Fahrbahneffekten (Schlaglöcher, verschiedene Reibwerte) zu vermeiden. Die vorliegende Erfindung setzt sich zum Ziel, eine zuverlässigere Druckverlusterkennung auf Basis von Daten der Raddrehzahl zur Verfügung zu stellen.

Diese Aufgabe wird erfindungsgemäß gelöst durch ein Verfahren gemäß Anspruch 1 und eine Vorrichtung gemäß Anspruch 8.

Nach dem erfindungsgemäßen Verfahren werden zunächst die folgenden Schritte durchgeführt:

a) Bildung von mindestens zwei unterschiedlich ermittelten Referenzgrößen $Ref_i$, die gebildet sind aus mindestens zwei Raddrehzahlinformationen der Gruppe vorderes linkes Rad VL, vorderes rechtes Rades VR, hinteres linkes Rad HL und hinteres rechtes Rad HR.

b) Erkennung eines vorläufigen Druckverlusts durch Überprüfen, ob mindestens eine Referenzgröße $Ref_i$ eine vorgegebene Mindestabweichung von einem Sollwert für diese Referenzgröße aufweist.

Im Anschluß daran wird gemäß der Erfindung eine endgültige Erkennung auf einen Druckverlust (z.B. Anzeige einer Druckverlustwarnung auf dem Armaturenbrett) in Abhängigkeit eines oder mehrerer Verfahren zur Überprüfung der Plausibilität durchgeführt. Die Erkennung wird durch dieses zusätzlichen Verfahren zusätzlich abgesichert. Treten in den Schritten a) und b) Fehlwarnungen auf, so kann die überwiegende Zahl der Fehlwarnungen durch die Plausibilitätsprüfung vermieden werden.

Zur Überprüfung der Plausibilität eines gemäß den Schritten a) und b) festgestellten vorläufigen Druckverlust wird der Betrag der Abweichung einer ersten Referenzgröße von einem Sollwert, der vorzugsweise gelernt ist, $|\Delta Ref_{f1}| = |Ref_{f1}-S_{f1}|$ und der Betrag der Abweichung einer weiteren Referenzgröße von einem weiteren Sollwert $|\Delta Ref_{f2}| = |Ref_{f2} - S_{f3}|$ miteinander verglichen.

Es kann für das Verfahren zweckmäßig sein, daß die Referenzgrößen der vorläufigen Druckverlusterkennung in den Schritten a) und b) auf die gleiche Weise gebildet werden, wie die Referenzgrößen bei der Plausibilitätsprüfung. Dies ist jedoch nicht unbedingt notwendig. Es kann daher auch vorgesehen sein, daß für die vorläufige Druckverlusterkennung auf andere Weise ermittelte Referenzwerte zum Einsatz kommen als bei der Plausibilitätsprüfung.

Die vorgegebene Mindestabweichung kann bevorzugt durch obere und untere Grenzwerte $G_1$, $G_2$ vorgegeben sein, wobei überwacht wird, ob diese Grenzwerte überschritten werden. Die Grenzwerte können gebildet werden, indem ein geeigneter Wert dem Sollwert zuaddiert oder vom Sollwert subtrahiert wird.

Das erfindungsgemäße Verfahren zum Messen des Drucks von Fahrzeugreifen wird vorzugsweise innerhalb eines Verfahrens zur Regelung der Bremskraft und/oder der Fahrdynamik (ABS, ASR, ESP) ausgeführt.

Die Raddrehzahlinformationen sind beispielsweise Geschwindigkeits-Daten von sensorisch bestimmten Radgeschwindigkeiten oder Daten, die Radgeschwindigkeiten auf Basis von Zeitintervallen angeben. Vorzugsweise handelt es sich bei den Raddrehzahlinformationen um Daten von aktuell ermittelten Radradien (dynamischer Radradius $r_d$), die ermittelt werden können nach der Formel $r_d = V_{ref} / \omega$,wobei $v_{ref}$ die durch das elektronische Bremssystem ermittelte Fahrzeuggeschwindigkeit ist.

Die Sollwerte, mit denen die Referenzwerte verglichen werden, können fest vorgeben oder durch ein an sich bekanntes Lernverfahren gelernt sein. Ein erfindungsgemäß einsetzbares Lernverfahren ist beispielsweise in der WO 98/52780 beschrieben. Das Lernverfahren, welches bevorzugt eingesetzt wird, hat den Zweck, unterschiedliche Laufeigenschaften der Räder, die durch unterschiedliches Abfahren der Reifen oder unterschiedliche Raddurchmesser auftreten können, auszugleichen. Die während der Lernphase berücksichtigten Daten sind möglichst während einer Geradeausfahrt, bei der sich alle Räder mit der gleichen Geschwindigkeit gegenüber dem Untergrund bewegen, zu gewinnen. Die eingelernten Daten können gemittelt werden und als Sollwert abgespeichert werden. Im Anschluß daran läßt sich die Vergleichsphase gemäß den Schritten a) und b) durchführen.

Vorzugsweise wird ein Druckverlust gemäß dem Verfahren dann als plausibel angesehen, wenn der Quotient des Betrags der Abweichungen $|\Delta Ref_{f1}| / |\Delta Ref_{f2}|$ kleiner ist, als der Wert von 1 zuzüglich oder abzüglich eines vorgegebenen Schwellenwertes SP (1*SP, 1/SP). Für SP sind Werte größer als 1 sinnvoll.

Es ist nicht immer sinnvoll, alle möglichen unterschiedlich gebildeten Referenzwerte miteinander in der vorstehend geschilderten Weise miteinander zu vergleichen. Vorzugsweise werden nur solche Paare einer ersten und weiteren Abweichung $|\Delta Re_{11}|$und $|\Delta Ref_{12}|$ miteinander verglichen, welche gemeinsam als Parameter die Drehzahlinformation eines Rades mit einem vermuteten Druckverlust enthalten.

Werden zum Beispiel die Referenzwerte aus den Verhältnissen der Radradien gebildet, wie beispielsweise nach den Formeln VL/VR, VL/HR, VR/HL, VR/HR, HL/HR, VL/HL oder deren Kehrwerte, so ist es zweckmäßig - wenn das Rad VL ein Rad ist, bei dem ein vorläufiger Druckverlust identifiziert wurde - nur die drei Referenzwerte VL/VR, VL/HL, VL/HR miteinander zu vergleichen. Besonders bevorzugt wird auch überprüft, ob die übrigen Quotienten, die das identifizierte Rad nicht enthalten, außerhalb des Bereichs liegende Abweichungen zeigen.

Die Referenzwerte $Ref_i$ sind beispielsweise mathematische Funktionen, in denen die Daten der Raddrehzahl Funktionsparameter sind, wie nachfolgend beispielhaft aufgeführt:

$$Ref_1 = (VL + HR) / (VR + HL) \text{ (Diagonalenverhältnis)}$$

$$Ref_2 = (VL + HL) / (VR + HR) \text{ (Seitenverhältnis)}$$

$$Ref_3 = (VL + VR) / (HL + HR) \text{ (Achsenverhältnis)}$$

Die Funktionen, die sich allgemein mit dem Ausdruck $Ref_i = F$ (A, B, C, D) beschreiben lassen, können sich entweder durch eine unterschiedliche mathematische Funktion F oder durch eine unterschiedliche Anordnung der Funktionsparameter A, B, C und D voneinander unterscheiden.

Vorzugsweise werden die unterschiedlichen Referenzgrößen $Ref_i$ mittels der gleichen mathematischen Funktion $Ref_i$ = F(VL, HR, VR, HL) bzw. auch $Ref_i$ = F(VL, HR) gebildet, wobei sich die Funktionen durch eine unterschiedliche Anordnung der Funktionsparameter unterscheiden.

Bei der Bildung der Referenzwerte kann beispielsweise die Formel $Ref_1$ = F(VL, HR, VR, HL) oder die Formel $Ref_2$ = F(VL, HR, HL, VR) verwendet werden. In der Parameterliste der Funktion sind die Radparameter permutiert sind. Bei vier Rädern ergeben sich im allgemeinen 24 Möglichkeiten zur Permutation.

Wie weiter oben beschrieben, kann auch die Funktion F verschieden gewählt sein. Es sind bevorzugt solche Funktionen geeignet, mit denen sich eine Verhältnisgröße aus den Raddrehzahlinformationen berechnen läßt. Nachfolgend sind einige Beispiele für geeignete Funktionen F aufgeführt:

$$F_1 = (A + B) / (C + D) ,$$

$$F_2 = (A / B) - (C / D) ,$$

$$F_3 = (A + B) - (C + D) ,$$

$$F_4 = (A / B) ,$$

$$F_5 = (A / B) / (C / D)$$

oder

$$F_6 = (A / (A + B + C + D).$$

Besonders bevorzugt wird die Funktion F so gewählt, daß Abweichungen der Raddrehzahl voneinander möglichst deutlich zu Tage treten. Dies beinhaltet den Vorteil, daß die Speicherung der Referenzwerte mit einem vergleichsweise geringen Bedarf an Speicherplatz ermöglicht wird, bei gleichzeitig ausreichender Empfindlichkeit des Referenzwerts von relativen Abweichungen in der Raddrehzahl einzelner Räder.

Die Referenzgröße Ref wird bevorzugt zur Bestimmung des vorläufigen Druckverlusts gebildet, indem die Summen jeweils zweier die Raddrehzahlen repräsentierender Signale dividiert werden.

Die Erfindung betrifft auch eine Vorrichtung zum Regeln der Bremskraft und/oder der Fahrdynamik und zur Erkennung eines Druckverlusts von Reifen in einem Kraftfahrzeug, welches sich dadurch auszeichnet, daß ein Mikrorechner, der mit Raddrehzahlsensoren und gegebenenfalls zusätzlichen Fahrdynamiksensoren verbunden ist, das vorstehend beschriebene Verfahren gemeinsam mit einem an sich bekannten Verfahren zur Regelung der Bremskraft und/oder Fahrdynamik abarbeitet.

Da das erfindungsgemäße Verfahren im wesentlichen lediglich Einrichtungen benötigt, die ohnehin in einem üblicherweise eingesetzten ABS-, ASR- oder ESP-System vorhanden sind, läßt sich dieses auf vorteilhafte Weise in ein solches System kostengünstig integrieren.

Bevorzugt ist die Vorrichtung so gestaltet, daß sie nach Erkennung eines Druckverlusts ein Signal beispielsweise über eine Leitung oder aber über ein Datenregister abgibt, welches die Information "Druckverlust" enthält.

Das weiter oben beschriebene Verfahren zur Druckverlusterkennung kann insbesondere zur verbesserten Genauigkeit während der Fahrt auf Fahrbahnen mit niedrigem Haftreibungskoeffizienten $\mu$ (z.B. auf Eis oder Schnee) durch das nachstehende Verfahren, welches eine weitere bevorzugte Ausführungsform der Erfindung darstellt, erweitert werden. Wenn eine Fahrt auf Eis oder Schnee durch ein zu großes Datenrauschen erkannt wird, kann die Verarbeitung von Daten im Druckverlusterkennungsalgorythmus unterbunden werden. Alternativ läßt sich auch lediglich die Ausführung der Lernphase für die Dauer des Rauschens unterdrücken.

Zusätzlich werden daher die folgenden Verfahrensschritte zur Erkennung von Rauschen in den Referenzgrößen durchgeführt:

(a) Speichern einer Referenzgröße, insbesondere mit einem Verhältnis der diagonalen Radgeschwindigkeiten, in einem Speicher $Ref_i^{old}$,
(b) Ermitteln einer neuen Referenzgröße $Ref_i$ nach einer bestimmten Zeit und Feststellen, ob $Ref_i$ um einen festgelegten Mindestbetrag von $Ref_i^{old}$ abweicht und Speichern dieses neuen Wertes $Ref_i$ in $Refi^{old}$,
(c) Rücksetzen eines Zählers auf einen Startwert, wenn Bedingung (b) erfüllt ist, andernfalls, wenn die Bedingung nicht erfüllt ist, Weiterzählen des Zählers um einen bestimmten Betrag,
(d) Ausführung der Schritte (a) und (b) mit Raddrehzahlinformationen, die von den Rädern der nicht angetrieben Achse des Fahrzeugs stammen,
(e) Rücksetzen eines weiteren Zählers auf einen Startwert, wenn Bedingung (b) erfüllt ist, andernfalls, wenn die Bedingung nicht erfüllt ist, Weiterzählen des Zählers um einen bestimmten Betrag, wobei in Schritt e) ausschließlich Raddrehzahlinformationen der nicht angetriebenen Achse verwendet werden und
(f) Unterdrücken des Einlernens von Referenzwerten und/oder des Verwendens von Referenzwerten in der Vergleichsphase, wenn ein vorgegebener Zählerstand der verwendeten Zähler nicht überschritten wird.

Unter dem Begriff "Weiterzählen" wird das Heraufzählen oder Herunterzählen verstanden. Insbesondere werden die verwendeten Zähler heruntergezählt (dekrementiert).

Es kann zweckmäßig sein, zumindest eine Erkennung eines Druckverlusts zuzulassen, wenn lediglich die Rauscherkennung an der nicht angetriebenen Achse ein Datenrauschen durch einen nichtabgelaufenen Zähler signalisiert.

Bevorzugt handelt es sich bei den für die Rauscherkennung eingesetzten Referenzwerte um Daten, die nicht gefiltert oder gemittelt sind.

Es ist zweckmäßig, wenn die vorstehend beschriebene Rauscherkennung nur dann durchgeführt wird, wenn mittels eines Kurvenfahrterkennungsverfahrens festgestellt wird, daß der gefahrene Kurvenradius im wesentlichen beibehalten wird oder eine durch das Kurvenfahrterkennungsverfahren festgestellte Geradeausfahrt im wesentlichen beibehalten wird. Methoden zur Erkennung einer Kurvenfahrt sind an sich bekannt. Beispielsweise kann dies dadurch erfolgen, daß geprüft wird, ob die Gierrate, welche gegebenenfalls über mehrere Werte gemittelt bzw. gefiltert sein kann, innerhalb des zur Rauscherkennung maßgebenden Zeitraums (wenn der Zähler aktiv ist) einen konstanten Wert beibehält bzw. nicht mehr als um einen bestimmten Betrag schwankt. Alternativ können aber auch für den gleichen Zweck Querbeschleunigungsdaten eines häufig in modernen Bremssystemen vorhandenen Querbeschleunigungssensors zur Kurvenfahrtbestimmung herangezogen werden. Außerdem können für diesen Zweck die Raddaten selbst zur Kurvenfahrterkennung benutzt werden.

Besonders bevorzugt wird bei der Rauscherkennung analog zu den Schritten (a) und (b) ein Zähler für eine Rauscherkennung gestartet, die ausschließlich auf Daten von Raddrehzahlinformationen beruht, die von den Rädern der nicht angetrieben Achse des Fahrzeugs stammen. Nach der hier beschriebenen Ausführungsform sind folgende Schritte ausführen:

(c2) Rücksetzen eines weiteren Zählers auf einen Startwert, wenn Bedingung (b) unter Verwendung von Raddrehzahlinformationen der nicht angetriebenen Achse erfüllt ist,
(c3) Weiterzählen des Zählers um einen bestimmten Betrag, andernfalls, wenn die Bedingung nicht erfüllt ist.

Nachfolgend wird das erfindungsgemäße Verfahren anhand eines Ausführungsbeispiels und der Figur näher erläutert.

Es zeigt

Fig. 1 ein Diagramm zur Erläuterung des Verfahrens zur Überprüfung der Plausibilität und
Fig. 2 ein Ablaufdiagramm für das erfindungsgemäße Verfahren zur Erkennung eines Druckverlusts.

Zunächst werden die Datenspeicher der Vorrichtung über einen nicht dargestellten Rücksetz-Schalter in einen Ausgangszustand zurückgesetzt. Dies wird in der Regel durch den Fahrer des Kraftfahrzeugs nach Auffüllen der Reifen mit Luft auf den vorgesehenen vorgeschriebenen Reifendruck bewerkstelligt. Danach beginnt die Lernphase der Druckverlusterkennung.

In der Lernphase (und in der Vergleichsphase) werden die Winkelgeschwindigkeiten der Räder mittels Radsensoren aufgenommen. Eine erhöhte Genauigkeit wird hierbei erzielt durch Verwendung der zeitlichen Größe T als Maß für die Radgeschwindigkeit. Auf diese Weise kann eine Synchronisation auf eine Sensorflanke erfolgen. Dies bietet den Vorteil einer erhöhten Genauigkeit bei der Bestimmung der Radgeschwindigkeiten.

Während der Fahrt werden Referenzwerte $Ref_i$ aus den Radsignalen gebildet und Sollwerte $S_i$ für die Ver-

gleichsphase (Schritt 12, Fig. 2) in der Lernphase erzeugt.
Die Referenzwerte werden nach der Formel

$$Ref_i = (A+B)/(C+D)$$

aus aktuellen Werten von Raddrehzahldaten der Räder VL, VR, HL und HR berechnet. Würden alle Räder bei Idealbedingungen (Geradeausfahrt) die gleiche Winkelgeschwindigkeit haben, so betrüge der Wert des Referenzwertes $Ref_1$ = 1. Bei einem Druckverlust weicht der Referenzwert um einen bestimmten Betrag vom Wert 1 ab.

Danach wird geprüft, ob die Fahrbedingungen in einem zulässigen Bereich liegen. Wenn eine Fahrbedingung vorliegt, die ein Bilden der Referenzwerte als nicht sinnvoll erscheinen läßt, beispielsweise wenn die Längsbeschleunigung, die Querbeschleunigung oder die Radbeschleunigung bestimmte Schwellenwerte überschreiten, so werden keine Referenzwerte gespeichert. Die Referenzwerte R(t) können zur Rauschunterdrückung gegebenenfalls zeitlich gefiltert oder gemittelt werden. Der gelernte Durchschnittswert von Ref wird in der Variable $Ref^m$ gespeichert.

Nach Abschluß der Lernphase werden obere und untere Grenzwerte $G_1$ und $G_2$ festgelegt, indem ein Offsetwert zum ermittelten Mittelwert der Referenzwerte $Ref^M$ hinzuaddiert bzw. subtrahiert wird.

Ist die Lernphase beendet, beginnt die Vergleichsphase 11, 12, 13, 14, welche in Fig. 2 dargestellt ist.

In der Vergleichsphase (Schritt 12)werden zunächst in Schritt 11 neu ermittelte Referenzwerte mit den Sollwerten $S_i$ verglichen. Dabei wird geprüft, ob die aktuellen gefilterten oder ungefilterten Referenzwerte folgende Gleichung erfüllen:

$${}_iG_1 < {}_iRef < {}_iG_2 \; .$$

Ist die Formel erfüllt, liegt ein vorläufig erkannter Druckverlust vor, der noch überprüft werden muß. Hierzu dient Schritt 13, welcher überprüft, ob der vorläufig erkannte Druckverlust plausibel ist.

Zur Überprüfung der Plausibilität wird die Differenz jeweils für

$$Ref_1 = (VL + HR) / (VR + HL) \text{ (Diagonalenverhältnis) ,}$$

$$Ref_2 = (VL + HL) / (VR + HR) \text{ (Seitenverhältnis)}$$

und

$$Ref_3 = (VL + VR) / (HL + HR) \text{ (Achsenverhältnis)}$$

zwischen dem zugeordneten Sollwert $S_i$, $S_2$, $S_3$ aus der Lernphase nach der Formel $|\Delta Ref_i| = |Ref_i - Si|$ berechnet.

Jeweils zwei Referenzwerte $|\Delta Ref_{f1}|$ und $|\Delta Ref_{f2}|$ werden miteinander verglichen, wie in Fig. 1 dargestellt ist (Bezugszeichen 1 und 2). Damit ein Druckverlust plausibel ist, muß unter anderem die Differenz der diagonalen Räder ($|\Delta Ref_1|$) der Differenz der seitlichen Räder ($|\Delta Ref_2|$) ungefähr entsprechen.

Hierzu wird ein Grenzwertbereich 6 für den Vergleich definiert; im Diagramm gemäß Fig. 1 durch Berechnung der Bedingung

$$(1 / SP) = |\Delta Ref_1| / |\Delta Ref_2| = (1 * SP),$$

worin SP größer als 1 ist. Geeignete Werte für SP lassen sich durch Fahrversuche ermitteln.

Bezugszeichen 4 zeigt die Obergrenze der Steigung des Quotienten 3. Bezugszeichen 5 zeigt die entsprechende Untergrenze. Liegt der Quotient außerhalb des Bereichs 6, liegt kein Druckverlust vor. Liegt der Quotient innerhalb des Bereichs 6, deutet dies auf einen Druckverlust hin.

Deutet auch der Quotient $|\Delta Ref_{2|}$ / $|\Delta Ref_3|$ auf einen Druckverlust hin, so gilt der vorläufige Druckverlust als plausibel.

## Patentansprüche

**1.** Verfahren zur Erkennung eines Reifendruckverlusts in Kraftfahrzeugen mit den Schritten:

a) Bildung von mindestens zwei unterschiedlich ermittelten Referenzgrößen $Ref_i$, die gebildet sind aus mindestens zwei Raddrehzahlinformationen der Gruppe vorderes linkes Rad VL, vorderes rechtes Rades VR, hinteres linkes Rad HL und hinteres rechtes Rad HR (11), und
b) Erkennung eines vorläufigen Druckverlusts durch Überprüfen, ob mindestens eine Referenzgröße $Ref_i$ eine vorgegebene Mindestabweichung von einem Sollwert $S_i$ für diese Referenzgröße aufweist (12),

wobei eine endgültige Erkennung auf einen Druckverlust (14) in Abhängigkeit eines oder mehrerer Verfahren zur Überprüfung der Plausibilität (13) erfolgt,
**dadurch gekennzeichnet, daß** zur Überprüfung der Plausibilität der Betrag der Abweichung einer ersten Referenzgröße (1) von einem Sollwert $|\Delta Ref_f| = |Ref_{f1}, - S_{f1}|$ und der Betrag der Abweichung einer weiteren Referenzgröße (2) von einem weiteren Sollwert $|\Delta Ref_{f2}| = |Ref_{f2} - S_{f3}|$ miteinander verglichen wird.

**2.** Verfahren nach Anspruch 1, **dadurch gekennzeichnet, daß** ein Druckverlust plausibel ist, wenn der Quotient des Betrags der Abweichungen $|\Delta Ref_{f1}|$ / $|\Delta Ref_{f2}|$ (3) kleiner ist, als der Wert von 1 dividiert bzw. multipliziert mit einem vorgegebenen positiven Schwellenwertes SP (4,5).

**3.** Verfahren nach Anspruch 1 oder 2, **dadurch gekennzeichnet, daß** nur solche Paare einer ersten und weiteren Abweichung $|\Delta Ref_{f1}|$ und $|\Delta Ref_{f2}|$, das in den Ansprüchen 2 und 3 angegebene Kriterium erfüllen müssen, welche gemeinsam als Parameter die Drehzahlinformation eines Rades mit einem vermuteten Druckverlust enthalten.

**4.** Verfahren nach mindestens einem der Ansprüche 1 bis 3, **dadurch gekennzeichnet, daß** die unterschiedlichen Referenzgrößen $Ref_i$ mittels der gleichen mathematischen Funktion $Ref_i$ = F(VL, HR, VR, HL) gebildet werden und sich durch eine Vertauschung der Raddrehzahlinformationswerte in der Parameterliste der Funktion F unterscheiden.

**5.** Verfahren nach mindestens einem der Ansprüche 1 bis 4, **dadurch gekennzeichnet, daß** das Verfahren zum Messen des Drucks von Fahrzeugreifen innerhalb eines Verfahrens zur Regelung der Bremskraft und/oder der Fahrdynamik (ABS, ASR, ESP) ausgeführt wird.

**6.** Verfahren nach mindestens einem der Ansprüche 1 bis 5, **dadurch gekennzeichnet, daß** eine Rauscherkennung bei der Ermittlung der Referenzgrößen durchgeführt wird, mit den Schritten:

(a) Speichern einer Referenzgröße in einem Speicher $Ref_i^{old}$,
(b) Ermitteln einer neuen Referenzgröße $Ref_i$ nach einer bestimmten Zeit und Feststellen, ob $Ref_i$ um einen festgelegten Mindestbetrag von $Ref_i^{old}$ abweicht und Speichern dieses neuen Wertes $Ref_i$ in $Ref_i^{old}$
(c) Rücksetzen eines Zählers auf einen Startwert, wenn Bedingung (b) erfüllt ist, andernfalls, wenn die Bedingung nicht erfüllt ist, Weiterzählen des Zählers um einen bestimmten Betrag,
(d) Unterdrücken des Einlernens von Referenzwerten und/oder des Verwendens von Referenzwerten in der Vergleichsphase, wenn ein vorgegebener Zählerstand des verwendeten Zählers nicht überschritten wird.

**7.** Verfahren nach Anspruch 6, **dadurch gekennzeichnet, daß** die Rauscherkennung nur durchgeführt wird, wenn mittels eines Kurvenfahrterkennungsverfahrens festgestellt wird, daß der gefahrene Kurvenradius im wesentlichen beibehalten wird oder eine durch das Kurvenfahrterkennungsverfahren festgestellte Geradeausfahrt im wesentlichen beibehalten wird.

**8.** Vorrichtung zum Regeln der Bremskraft und/oder der Fahrdynamik und zur Erkennung eines Druckverlusts von Reifen in einem Kraftfahrzeug, **dadurch gekennzeichnet, daß** in einem Mikrorechner, der mit Raddrehzahlsensoren und gegebenenfalls zusätzlichen Fahrdynamiksensoren verbunden ist, ein Programm abgelegt ist, welches alle Schritte eines Verfahrens nach mindestens einem der Ansprüche 1 bis 7 und eines an sich bekannten Verfahrens zur Regelung der Bremskraft und/oder Fahrdynamik durchführt.

## Claims

**1.** Method for detecting a pressure drop in tyres of motor vehicles, having steps:

a) formation of at least two reference variables $Ref_i$ which are determined differently and which are formed from at least two wheel speed information items from the group front left-hand wheel FL, front right-hand wheel FR, rear left-hand wheel RL and rear right-hand wheel RR (11), and
b) detection of a temporary drop in pressure by checking whether at least one reference variable $Ref_i$ has a predefined minimum deviation from a setpoint value $S_i$ for this reference variable (12),

wherein ultimate detection of a pressure drop (14) is carried out as a function of one or more methods for checking the plausibility (13),
**characterized in that**, in order to check the plausibility, the absolute value of the deviation of a first reference variable (1) from a setpoint value $|\Delta Ref_{f1}|$, I = | $Ref_{f1}$-$S_{f1}$| and the absolute value of the deviation of a further reference variable (2) from a further setpoint value $|\Delta Ref_{f2}|=|Ref_{f2}-S_{f3}|$ are compared with one another.

**2.** Method according to Claim 1, **characterized in that** a pressure loss is plausible if the quotient of the absolute value of the deviations $|\Delta Ref_{f1}|/|\Delta Ref_{f2}|$ (3) is less than the value of 1 divided or multiplied by a predefined positive threshold value SP (4, 5).

**3.** Method according to Claim 1 or 2, **characterized in that** only pairs of a first and further deviation $|\Delta Ref_{f1}|$ and $|\Delta Ref_{f2}|$ which together contain as parameters the rotational speed information of a wheel with a supposed pressure drop have to meet the criterion which is specified in Claims 2 and 3.

**4.** Method according to at least one of Claims 1 to 3, **characterized in that** the different reference variables $Ref_i$ are formed by means of the same mathematical function $Ref_i$ = F(FL, RR, FR, RL) and differ through interposing of the wheel speed information values in the parameter list of the function F.

**5.** Method according to at least one of Claims 1 to 4, **characterized in that** the method for measuring the pressure of vehicle tyres is carried out within a method for controlling the braking force and/or the vehicle movement of dynamics (ABS, traction control system, ESP).

**6.** Method according to at least one of Claims 1 to 5, **characterized in that in that** a noise detection process is carried out during the determination of the reference variables, having the steps:

(a) storage of a reference variable in a memory $Ref_i^{old}$
(b) determination of a new reference variable $Ref_i$ after a specific time and detection whether $Ref_i$ deviates from $Ref_i^{old}$ by a defined minimum absolute value, and storage of this new value $Ref_i$ in $Ref_i^{old}$,
(c) resetting of a counter to a start value if condition (b) is met, and otherwise if the condition is not met the counter is implemented by a specific amount,
(d) suppression of the learning of reference values and/or of the use of reference values in the comparison phase if a predefined counter reading of the counter which is used is not exceeded.

**7.** Method according to Claim 6, **characterized in that** the noise detection process is carried only if it is detected by means of a cornering-detection method that the bend radius being travelled along is essentially maintained or straight-ahead travel which is detected by the cornering-detection method is essentially maintained.

**8.** Device for controlling the braking force and/or the vehicle movement dynamics and for detecting a pressure drop of tyres in a motor vehicle **characterized in that** a program which carries out all the steps of a method according to at least one of Claims 1 to 7 and of a method known per se for controlling the braking force and/or vehicle movement dynamics is stored in a microcomputer which is connected to wheel speed sensors and, if appropriate, additional vehicle movement dynamics sensors.

## Revendications

**1.** Procédé de détection d’une perte de pression des bandages pneumatiques des roues d’un véhicule automobile, le procédé présentant les étapes qui consistent à :

a) former au moins deux grandeurs de référence $Ref_i$ déterminées différemment, formées d'au moins deux informations de vitesse de rotation des roues du groupe constitué de la roue avant gauche VL, de la roue avant droite VR, de la roue arrière gauche HL et de la roue arrière droite HR (11) et
b) détecter une perte temporaire de pression en vérifiant si au moins une grandeur de référence $Ref_i$ présente un écart minimum prédéterminé par rapport à une valeur de consigne Si de cette grandeur de référence (12),

la détection finale d'une perte de pression (14) s'effectuant en fonction d'un ou plusieurs procédés de vérification de plausibilité (13),
**caractérisé en ce que**
pour vérifier la plausibilité, l'ampleur de l'écart d'une première grandeur de référence (1) par rapport à une valeur de consigne $|\Delta Ref_{f1}| = |Ref_{f1} - S_{f1}|$ et l'ampleur de l'écart d'une autre grandeur de référence (2) par rapport à une autre valeur de consigne

$$|\Delta Ref_{f2}| = |Ref_{f2} - S_{f3}|$$

sont comparées l'une à l'autre.

2. Procédé selon la revendication 1, **caractérisé en ce qu'**une perte de pression est plausible si le quotient entre les ampleurs des écarts $|\Delta Ref_{f1}| / |\Delta Ref_{f2}|$ (3) est inférieur à la valeur 1 divisée ou multipliée par une valeur de seuil positive prédéterminée SP (4, 5).

3. Procédé selon les revendications 1 ou 2, **caractérisé en ce que** seules des paires constituées d'un premier et d'un autre écart $|\Delta Ref_{f1}|$ et $|\Delta Ref_{f2}|$ doivent satisfaire les critères définis dans les revendications 2 et 3 et qui contiennent ensemble comme paramètres l'information de vitesse de rotation d'une roue pour laquelle on soupçonne une perte de pression.

4. Procédé selon au moins l'une des revendications 1 à 3, **caractérisé en ce que** les différentes grandeurs de référence $Ref_i$ sont formées au moyen de la même fonction mathématique $Ref_i = F(VL, HR, VR, HL)$ et se distinguent par un remplacement des valeurs d'information de vitesse de rotation de roue dans la liste de paramètres de la fonction F.

5. Procédé selon au moins l'une des revendications 1 à 4, **caractérisé en ce que** le procédé de mesure de la pression des bandages pneumatiques des roues du véhicule est réalisé à l'intérieur d'un procédé de régulation de la force de freinage et/ou de la dynamique de roulage (ABS, ASR, ESP).

6. Procédé selon au moins l'une des revendications 1 à 5, **caractérisé en ce que** lors de la détermination des grandeurs de référence, le bruit est détecté par les étapes qui consistent à :

(a) conserver une grandeur de référence dans une mémoire $Ref_i^{old}$,
(b) déterminer une nouvelle grandeur de référence $Ref_i$ après une durée définie, vérifier si $Ref_i$ s'écarte de $Ref_i^{old}$ d'une valeur minimale définie et conserver cette nouvelle valeur $Ref_i$ dans $Re_{fi}^{old}$,
(c) replacer un compteur à une valeur initiale lorsque la condition (b) est satisfaite, sinon, lorsque la condition n'est pas satisfaite, poursuivre le comptage du compteur sur une valeur définie,
(d) supprimer l'apprentissage de valeurs de référence et/ou l'utilisation de valeurs de référence dans la phase de comparaison si un état prédéterminé du compteur utilisé n'est pas dépassé.

7. Procédé selon la revendication 6, **caractérisé en ce que** le bruit n'est détecté que si un procédé de détection de conduite en virage constate que le rayon de courbure suivi est essentiellement maintenu ou si un déplacement en ligne droite constaté par le procédé de détection de déplacement en virage est essentiellement maintenu.

8. Dispositif de régulation de la force de freinage et/ou de la dynamique de conduite et de détection d'une perte de pression dans les bandages pneumatiques d'un véhicule automobile,
**caractérisé en ce que**
un programme qui exécute toutes les étapes d'un procédé selon au moins l'une des revendications 1 à 7 et d'un procédé connu en soi de régulation de la force de freinage et/ou de la dynamique de roulage est installé dans un microcalculateur qui est relié à des détecteurs de vitesse de rotation de roue et éventuellement à des détecteurs supplémentaires de dynamique de roulage.

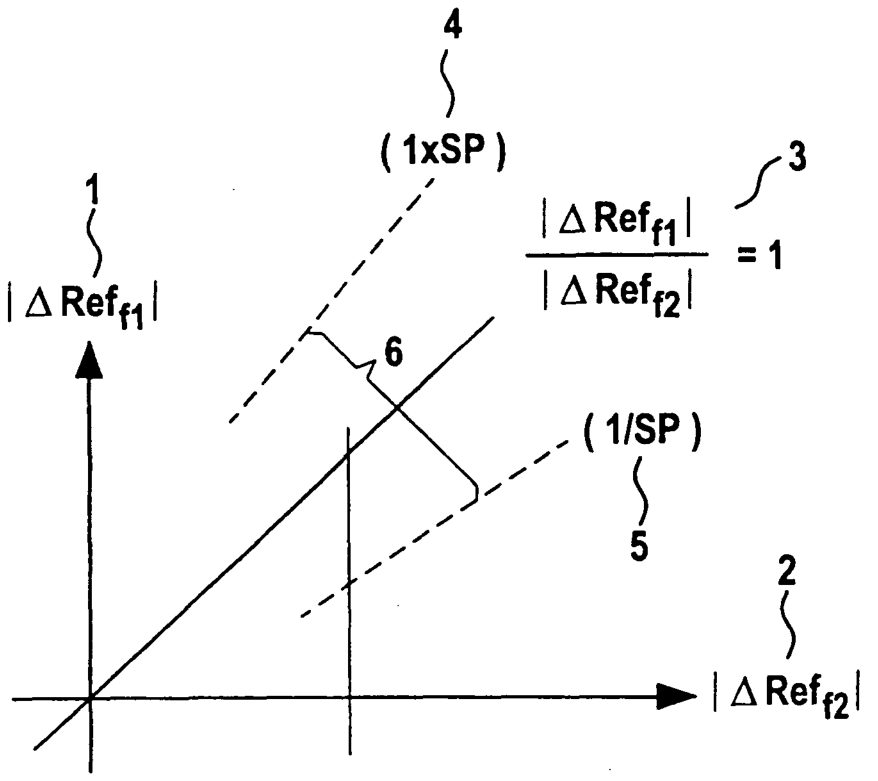
4
( 1xSP )
3
1
$|\Delta Ref_{f1}|$
$\frac{|\Delta Ref_{f1}|}{|\Delta Ref_{f2}|} = 1$
6
( 1/SP )
5
2
$|\Delta Ref_{f2}|$

Fig. 1

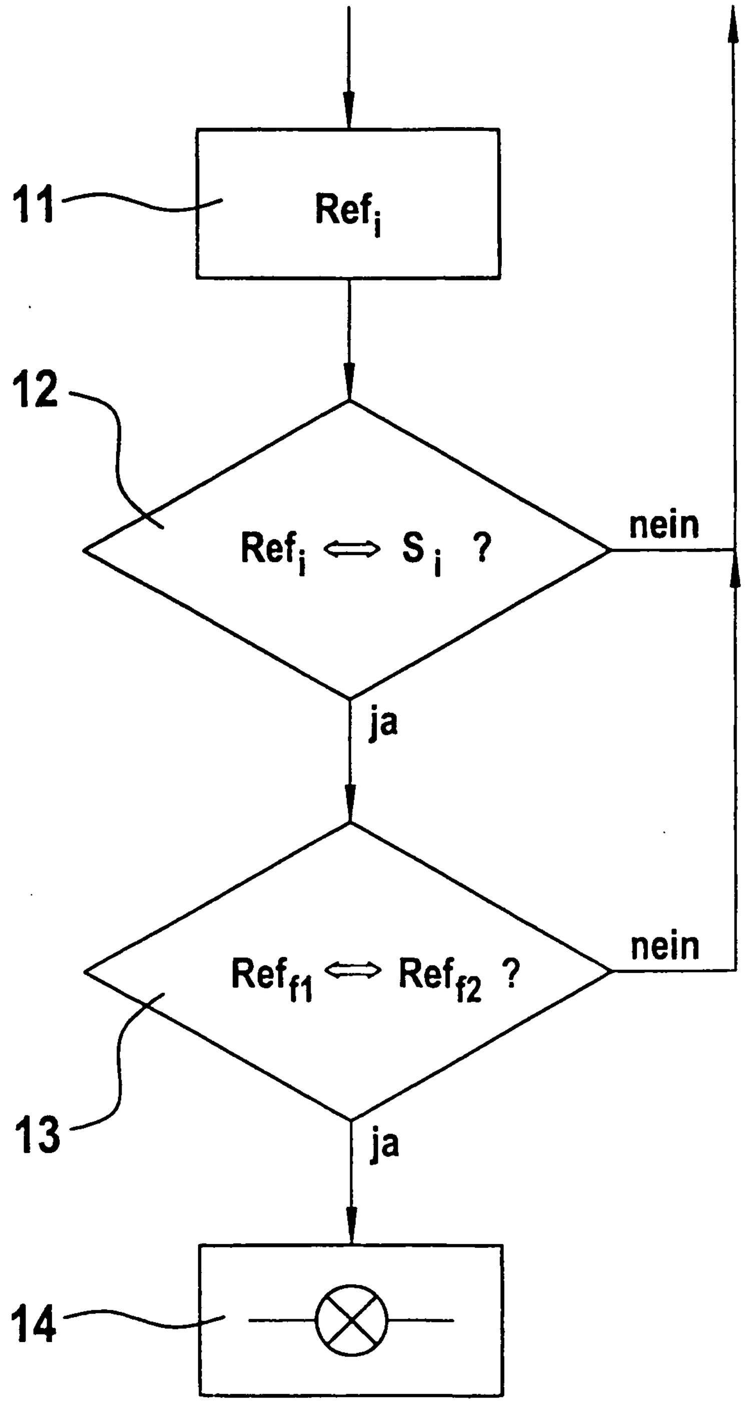


Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19961681
- DE 19721480 A1
- EP 0489563 A1
- EP 0579446 A1
- WO 9852780 A